# EUROPEAN PATENT SPECIFICATION

(11) **EP 4 575 243 B1**
(45) Date of publication and mention of the grant of the patent: **13.05.2026**
(21) Application number: 24211968.3
(22) Date of filing: 11.11.2024
(51) Int. Cl.: H01R 4/30, H01R 4/34, H01R 11/12, F16B 5/02, F16B 31/02

(54) **CONNECTOR**
VERBINDER
CONNECTEUR

(30) Priority: 21.12.2023 JP 2023216057
(43) Date of publication of application: 25.06.2025
(73) Proprietor: Japan Aviation Electronics Industry, Limited, Tokyo 150-0043 (JP)
(72) Inventor: KIMURA, Akira, Tokyo, 150-0043 (JP)
(74) Representative: MERH-IP Matias Erny Reichl Hoffmann Patentanwälte PartG mbB

(56) References cited:
- DE-A1- 102006 000 767
- US-A- 4 943 247
- US-B2- 6 939 097

## Description

### TECHNICAL FIELD

The present disclosure relates to a connection structure for terminals of a connector.

### BACKGROUND ART

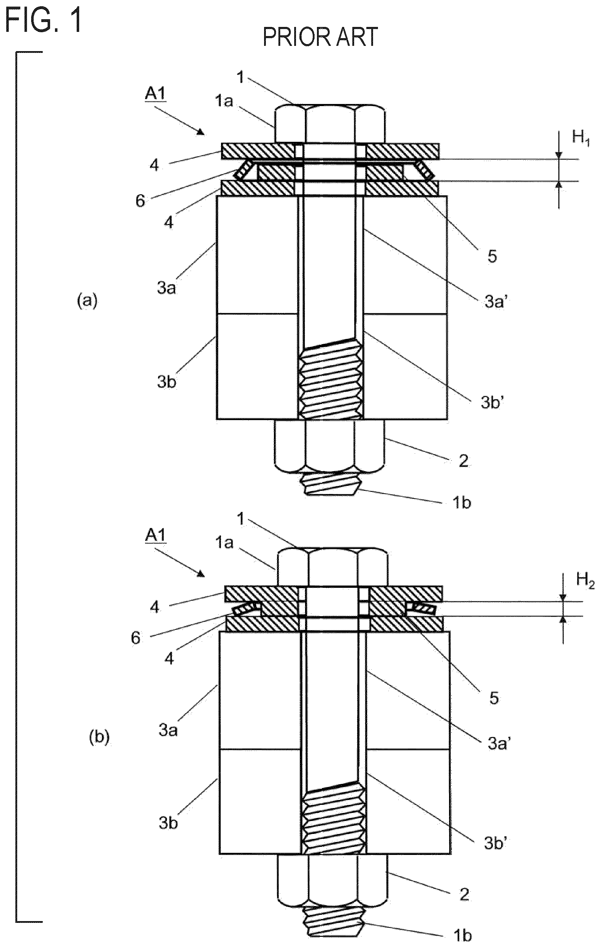

As a connection structure for connector terminals, it is conceivable to achieve electrical conduction by tightening terminals as fastening objects with each other by use of bolts and nuts. As a prior art of a bolt fastening structure, there is a technology capable of suppressing variations in bolt axial force with a simple configuration (e.g., see Patent Literature 1 (Japanese Patent Application Laid Open No. 2015-166621)). FIG. 1 is a view showing a prior-art bolt fastening structure. The bolt fastening structure of FIG. 1 includes a bolt 1 to be inserted into objects to be fastened 3a and 3b, two washers 4 provided between a head 1a of this bolt and the objects to be fastened, an annular spacer 5 provided between the two washers, and a disc spring 6 provided between the two washers and outside or inside the spacer in a radial direction and having a height in excess of a thickness of the spacer in a normal state.

Document DE 10 2006 000767 A1 generally discloses a device that has hollow tube type body which has an internal diameter larger than internal diameter of tapped hole of second construction unit and smaller than the internal diameter of the hole of first construction unit. The first construction unit is arranged protruding outward coaxial to the axis of the tapped hole at the second component in axial direction and its axial length is larger than the thickness of the first component.

Document US 6 939 097 B2 generally discloses a ground washer for attachment by a grounding screw to a grounding terminal. The washer device includes a disc-shaped member which defines an opening for the reception therethrough of the grounding screw. The member has an annular portion having a first and a second surface, the annular portion surrounding the opening. The annular portion cooperates with a plurality of teeth extending from the grounding terminal towards the annular portion of the member. A conical portion having a first and a second end, is disposed concentrically around the annular portion. A raised annular ridge is disposed between the annular portion and the conical portion, the ridge cooperating with the grounding screw such that when the grounding screw is turned, the ridge urges the annular portion into contact with the plurality of teeth of the grounding element. An annular flange is disposed concentrically around the conical portion, the flange mating with the grounding terminal. The arrangement is structured such that when the grounding screw is turned, the conical portion resiliently biases the annular ridge and the annular portion towards the plurality of teeth extending towards the annular portion while the flange stabilizes the biasing of the annular ridge so that an even contact between the plurality of teeth and the annular portion is facilitated.

### SUMMARY OF THE INVENTION

However, if the above-described prior-art bolt fastening structure is applied as it is to a connection structure for connector terminals, in a certain case, there is a problem that a tightening force is too weak to obtain a desired reaction force and that appropriate electrical joining may not be reached. In another case, there is a problem that the connector terminals are tightened more than necessary and that an extra load is applied to a peripheral component such as an insulator.

Here, to eliminate a difference in tightening force depending on a bolt fastener and to achieve a proper tightening force, it is conceivable to use a tool such as a torque wrench. However, in this case, not only a separate tool such as the torque wrench needs to be prepared but also laborious management needs to be performed, for example, to check whether the tool is exerting a proper torque.

In view of the above problems, an object of the present disclosure is to provide a connector capable of achieving connection between terminals with an appropriate contact force without using any tool such as a torque wrench.

To solve the above problems, the present invention provides a connector according to claim 1. The dependent claims relate to embodiments thereof.

According to an example not encompassed by the claims but useful for understanding the present disclosure, the connector according to the present example includes a nut including a nut part having one end and another end opposite to the one end, the nut part engageable with a predetermined bolt, and a flange part provided on the other end, a spring including a first hole part into which the nut part is insertable, the spring being mounted on the flange part by inserting the nut part from the one end into the first hole part, a first terminal including a second hole part into which the nut part is insertable, the first terminal being mounted on the spring by inserting the nut part from the one end into the second hole part, and a second terminal including a third hole part having a hole shape smaller than an outer shape of the nut part and larger than a threaded hole shape of the nut, the second terminal being mounted on the first terminal with the third hole part opposite to the second hole part. The connector is configured to provide a predetermined gap between the one end of the nut part and the second terminal, when the second terminal is mounted on the first terminal before the nut part is engaged with the predetermined bolt.

### EFFECTS OF THE INVENTION

According to a connector of the present embodiment, a contact force that is sufficient for electrical conduction and that applies no large load to peripheral components is managed with a predetermined gap V between a second terminal 112 and a nut 22, and the connector can therefore achieve connection between terminals with an appropriate contact force without using any tool such as a torque wrench or the like.

### BRIEF DESCRIPTION OF THE DRAWINGS

FIG. 1 is a view showing a bolt fastening structure of a prior art;
FIG. 2 illustrates views showing one example of a connector in a first embodiment, in which (a) is a perspective view, (b) is a top view, (c) is a side view;
FIG. 3 is an exploded perspective view in a case where a connector 1A shown in FIG. 2 is disassembled to a harness connector 10 and a main body connector 20;
FIG. 4 is an exploded perspective view of the harness connector 10;
FIG. 5 illustrate perspective views of a harness cover 12, in which (a) is a perspective view viewed from an outer surface of a top surface cover 121a, and (b) is a perspective view viewed from an inner surface of the top surface cover 121a;
FIG. 6 is an exploded perspective view of the main body connector 20;
FIG. 7 illustrates perspective views of a base 21, in which (a) is a perspective view viewed from a flange housing part 213b, and (b) is a perspective view viewed from a bottom 211;
FIG. 8 is an enlarged view around the main body connector 20 in an A-A cross-sectional view of (b) in FIG.2;
FIG. 9 illustrates schematic views for explaining a fastening state between a bolt 30 and a nut 22 shown in FIG. 8, in which (a) shows a state before bolt fastening, and (b) shows a state after the bolt fastening;
FIG. 10 is a diagram showing a relationship between a contact force F and a contact resistance R between a first terminal 24 and a second terminal 112;
FIG. 11 illustrates schematic views for explaining the fastening of the bolt 30 and the nut 22 in a connector 1A according to a first modification, in which (a) shows a state before bolt fastening, and in which (b) shows a state after the bolt fastening;
FIG. 12 is an exploded perspective view of the main body connector 20 according to the first modification;
FIG. 13 illustrates schematic views showing a cantilever spring component 27 as an example of another component, in which (a) is a perspective view, and (b) is a side view;
FIG. 14 illustrates schematic views for explaining fastening of a bolt 30Y and a nut 22Y in a connector 1A according to a second modification, in which (a) shows a state before bolt fastening, and (b) shows a state after the bolt fastening; and
FIG. 15 is an exploded perspective view of the main body connector 20 according to the second modification.

### DETAILED DESCRIPTION OF THE EMBODIMENTS

### FIRST EMBODIMENT

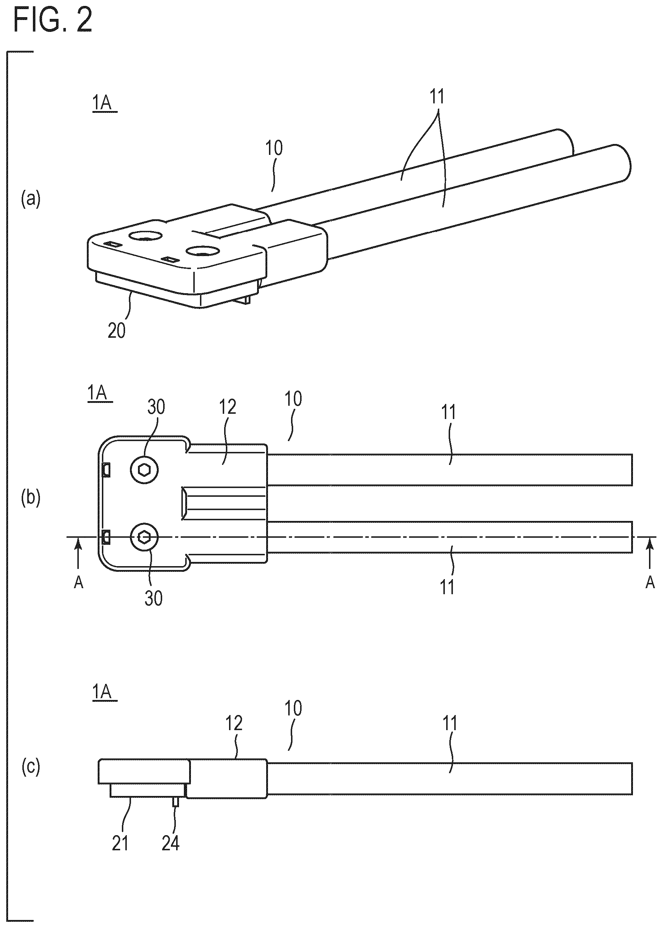

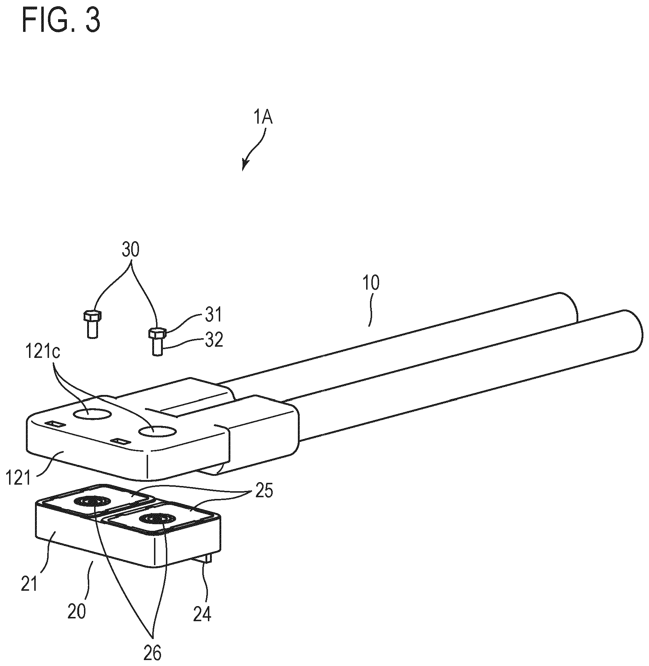

Hereinafter, a connector according to a first embodiment of the present disclosure will be described with reference to the drawings. FIG. 2 illustrates views showing one example of the connector in the first embodiment. (a) is a perspective view, (b) is a top view, and (c) is a side view. FIG. 3 is an exploded perspective view in a case where a connector 1A shown in FIG. 2 is disassembled to a harness connector 10 and a main body connector 20.

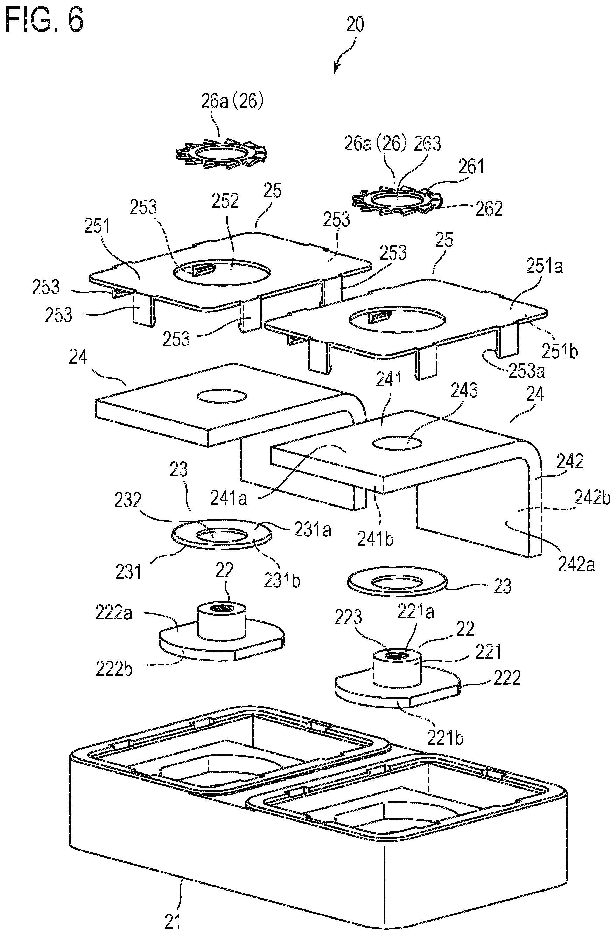

The connector 1A in the present embodiment is, for example, a connector for a large current of several hundred amperes. However, a structure for fastening between terminals in the connector of the present disclosure has no limitation to a magnitude of current and is not hindered from being applied with a larger current or a smaller current. As shown in FIGS. 2 and 3, the connector 1A in the present embodiment includes the harness connector 10, the main body connector 20, and a set of bolts 30, as main elements. The connector 1A is assembled by inserting the bolts 30 through two holes 121c provided in a harness cover 12 and two third hole parts 112d provided in a second terminal 112, respectively, to engage the bolts 30 with nuts 22 via protrusion members 26, lids 25, first terminals 24, and disc springs 23 in the main body connector 20. As will be described later, in the present embodiment, a toothed washer 26a is for use as an example of each protrusion member 26 (see FIG. 6). Hereinafter, each element constituting the connector 1A will be described.

### <Harness Connector 10>

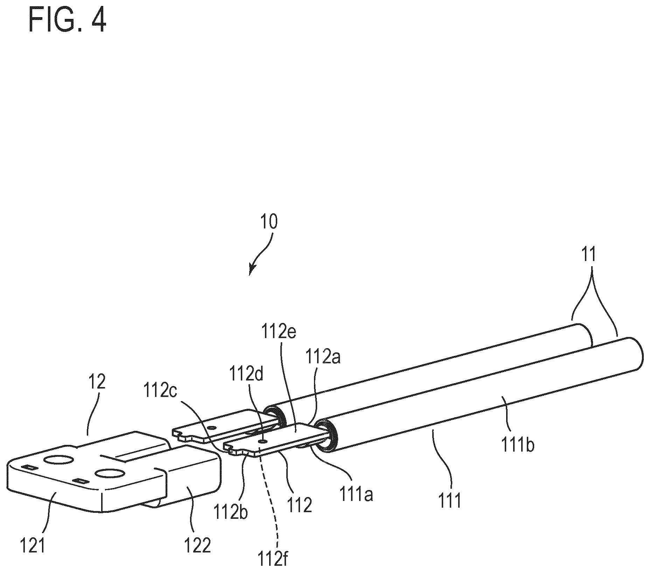

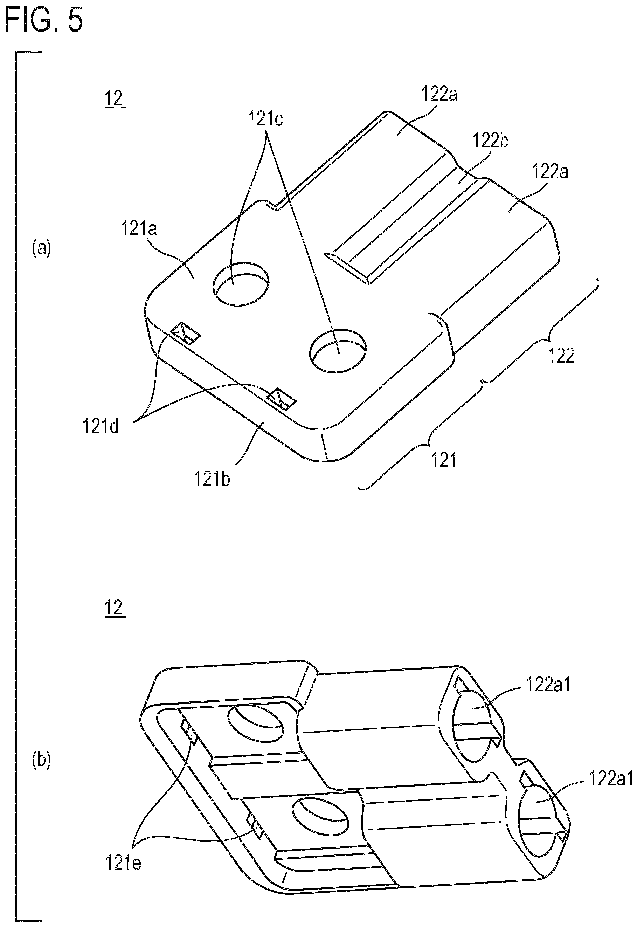

FIG. 4 is an exploded perspective view of the harness connector 10. FIG. 5 illustrates perspective views of the harness cover 12. (a) is a perspective view viewed from an outer surface of a top surface cover 121a, and (b) is a perspective view viewed from an inner surface of the top surface cover 121a. As shown in FIG. 4, the harness connector 10 includes harnesses 11 and the harness cover 12. The harness connector 10 of FIG. 4 includes two harnesses 11, and the connector of the present disclosure is not limited to two harnesses and may include a single harness 11 or three or more harnesses.

### (Harness 11)

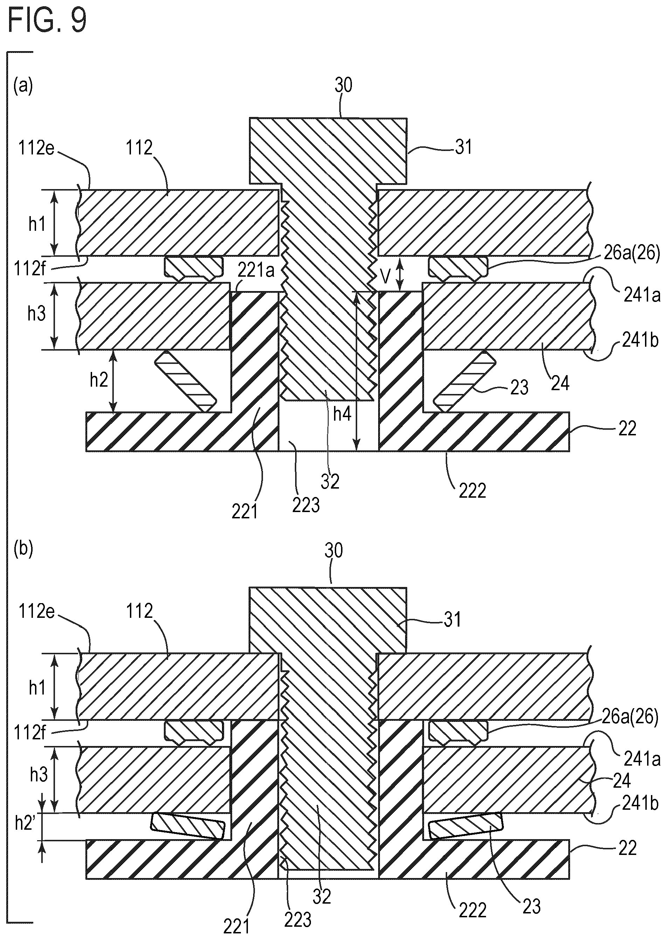

As shown in FIG. 4, each harness 11 includes a cable 111 and the second terminal 112. The cable 111 includes a copper wire 111a made of a copper alloy and an insulating material 111b covering the copper wire 111a. At one end of the cable 111, the copper wire 111a is exposed, and the copper wire 111a of an exposed portion has a tip having a semicylindrical shape in this example. However, the copper wire 111a of this example has a cylindrical shape before welded to the second terminal 112 and is formed in a semicylindrical shape by welding. Therefore, the copper wire 111a has, without limitation to, the semicylindrical shape and may have another shape. The second terminal 112 is a substantially rectangular thin metal plate and includes ends 112a, 112b at opposite ends in a longitudinal direction. The thin metal plate of the second terminal 112 has a thickness h1 (see FIG. 9). The copper wire 111a is welded to a surface 112f corresponding to a lower surface on an end 112a side in FIG. 4. In a center of the end 112b, a protruding part 112c inserted into a groove 121e (FIG. 5) of the harness cover 12 is provided. The second terminal 112 includes the third hole part 112d into which a threaded part 32 of the bolt 30 (FIG. 3) is insertable slightly closer to the end 112b side than to a center of the second terminal. The third hole part 112d has a hole shape smaller than an outer shape (cylindrical circular shape) of an after-mentioned nut part 221 (see FIG. 6) described later and larger than a threaded hole shape of the nut part 221. As will be described later, the second terminal 112 is mounted on the toothed washer 26a with the third hole part 112d opposite to a second hole part 243 (see FIG. 6) of each first terminal 24 (see FIG. 9).

### (Harness Cover 12)

The harness cover 12 houses a part of the cable 111, and the second terminal 112. The harness cover 12 undertakes a role of alignment for placing both the second terminal 112 and the first terminal 24 (see FIG. 6) at appropriate positions to fasten the second terminal and the first terminal. For this alignment, a fastening part 121 of the harness cover 12 houses a part (upper part) of the main body connector 20 on an inner surface of the fastening part. The harness cover 12 is made of, for example, a thermoplastic resin such as PBT and undertakes a role also as an insulating member. As shown in FIG. 5, the harness cover 12 includes a guide part 122 and the fastening part 121.

The guide part 122 is a cover covering a second terminal 112 side of the harness 11 and includes a set of tubular parts 122a and a plate-shaped coupling part 122b coupling the respective tubular parts 122a. Each of the set of tubular parts 122a has a tubular shape including a cross section having a roughly rounded square outer shape. Each tubular part 122a houses a portion of the second terminal 112, a portion of the copper wire 111a, and a portion of the insulating material 111b.

The guide part 122 includes a hole 122a1 that is a through hole having a slightly enlarged combined shape of a cross-sectional shape of the second terminal 112 in a width direction and a cross-sectional shape of the cable 111. However, the hole 122a1 has a hole shape extending without a shape into which the cable 111 is inserted and only with a cross-sectional shape of the second terminal 112 in the width direction, at an end of the guide part 122 on a fastening part 121 side. That is, the end of the guide part 122 on the fastening part 121 side is a standing wall having an opening into which the second terminal 112 is inserted. This configuration prevents the harness 11 from being inserted into the harness cover 12 more than necessary. By inserting the second terminals 112 into the holes 122a1, the holes 122a1 perform a role of an insertion guide, and together with the grooves 121e described later, a relative positional relationship between the harness connector 10 and the main body connector 20 is determined.

In addition to the role as the insulating member, the fastening part 121 undertakes the role of alignment for fastening the second terminal 112 and the first terminal 24, together with the guide part 122. The fastening part 121 includes the top surface cover 121a having a substantially rectangular flat plate shape, and a periphery cover 121b protruding in a direction (downward direction in (c) in FIG. 2) of inserting the bolts 30 from opposite ends of the top surface cover 121a in a longitudinal direction and one end of the periphery cover in a short direction, respectively. The other end of the top surface cover 121a in the short direction articulates with the end of the guide part 122. The top surface cover 121a includes a set of holes 121c having a shape into which a head 31 of the bolt 30 is insertable. Each hole 121c is provided at a position opposite to the third hole part 112d of the second terminal 112 when the second terminal 112 is inserted into the hole 122a1 and the protruding part 112c fits in the groove 121e. At an end of the top surface cover 121a opposite to the guide part 122, a set of grooves 121d is provided. Each groove 121d is a concave groove in a direction of inserting the bolt 30 from the top surface cover 121a (downward direction in (c) in FIG. 2). Furthermore, in portions of an inner surface of the periphery cover 121b opposite to the guide part 122, a set of grooves 121e that are concave grooves is provided in a direction of inserting the second terminal 112 (leftward direction in (c) in FIG. 2). Each groove 121d partially articulates with the groove 121e, and the fastening part 121 is formed as holes leading from outside to inside from the top surface cover 121a to the periphery cover 121b. Each groove 121e has a cross-sectional shape slightly larger than the cross-sectional shape of the protruding part 112c. Therefore, the second terminals 112 pass through the holes 122a1, and the protruding parts 112c fit in the grooves 121e, thereby determining relative positions between the harness 11 and the harness cover 12. As a result of this position determination, a central axis of each hole 121c and a central axis of each third hole part 112d have a positional relationship on the same axis.

### <Main Body Connector 20>

FIG. 6 is an exploded perspective view of the main body connector 20. As shown in FIG. 6, the main body connector 20 includes a base 21, the nuts 22, disc springs 23, first terminals 24, lids 25, and toothed washers 26a each of which is an example of the protrusion member 26. Since the harness connector 10 includes two harnesses 11 (FIG. 4), the main body connector 20 of FIG. 6 accordingly includes two nuts 22, two disc springs 23, two first terminals 24, two lids 25, and two toothed washers 26a.

### (Base 21)

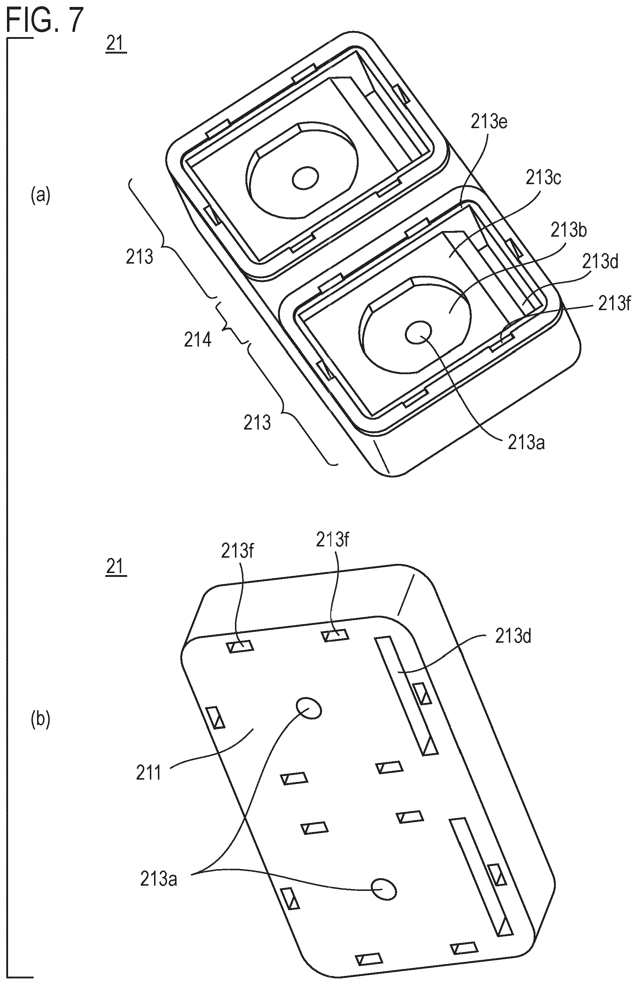

FIG. 7 illustrates perspective views of the base 21. (a) is a perspective view viewed from a flange housing part 213b, and (b) is a perspective view viewed from a bottom 211.

The base 21 shown in FIG. 7 is configured to be capable of housing two nuts 22, two disc springs 23, two first terminals 24, two lids 25, and two toothed washers 26a. The base 21 is an insulating member housing the first terminals 24 and includes a set of housing parts 213 and a coupling part 214 coupling respective housing parts 213. The base 21 is formed of, for example, a thermoplastic resin such as PBT.

Each housing part 213 has a substantially rectangular parallelepiped shape including holes 213a, the flange housing part 213b, terminal housing parts 213c, 213d, a lid housing part 213e, and six fitting holes 213f. Each hole 213a has a central axis provided at a position on the same axis as the central axis of the hole 121c when a part of the main body connector 20 is housed in the fastening part 121 of the harness connector 10. The hole 213a is formed as a through hole into which the threaded part 32 is insertable to prevent a tip of the threaded part 32 from protruding from the nut 22 and damaging the base 21 even when the bolt 30 having a threaded part having a longer axis than expected is inserted into the nut 22. The flange housing part 213b includes, in a center, a region of the hole 213a and has a groove shape capable of housing a flange part 222 of the nut 22 mounted from above. The groove shape of the flange housing part 213b has a shape slightly larger than that of the flange part 222 such that the flange housing part can house the flange part 222. The terminal housing part 213c includes, in a center, a region of the hole 213a and the flange housing part 213b and has a groove shape capable of housing a portion of a connecting part 241 of the first terminal 24 mounted from above. The terminal housing part 213c has a shape slightly larger than an outer shape of the connecting part 241 such that the terminal housing part can house most of the connecting part 241. The terminal housing part 213d is provided at a position outside the region of both the hole 213a and the flange housing part 213b in each housing part 213 and includes a through hole capable of housing most of an articulating part 242 when inserting the articulating part 242 of the first terminal 24 from above. The terminal housing part 213d has a hole shape slightly larger than a cross-sectional shape of the articulating part 242 such that the terminal housing part can house the articulating part 242. The terminal housing part 213c articulates with the terminal housing part 213d, and an articulating part has an inclined surface to correspond to a part of the first terminal 24 bent in an L-shape. The lid housing part 213e has a groove shape that digs a slightly wider shape than the terminal housing part 213c and the terminal housing part 213d to a depth equivalent to a plate thickness of a top surface cover 251 from above the terminal housing part 213c and the terminal housing part 213d such that a part around an edge of the top surface cover 251 of lid 25 can be mounted on the lid housing part. The six fitting holes 213f are through holes provided at positions into which fitting protrusions 253 can be inserted when mounting the lid 25 on the connecting part 241.

### (Nut 22)

As shown in FIG. 6, the nut 22 of the present embodiment includes the nut part 221 and the flange part 222. The nut part 221 is a part to be engaged with the bolt 30 and is an iron member including a threaded hole inside. The nut part 221 has, without limitation to, a cylindrical outer shape in this example. For example, the nut part may have another outer shape such as a polygonal cross-sectional outer shape. The nut part 221 has ends 221a and 221b. In this example, a length h4 of the nut part 221 in a direction of being engaged with the bolt 30 is larger than a thickness h3 of the first terminal 24 (see FIG. 9). The flange part 222, in this example, is a thin iron plate provided to protrude outward from a circumference of the cylindrical shape on an end 221b side. The flange part 222 has a shape including a parallel portion in a part of a circular shape cut out in parallel and entirely has a substantially oblong shape. The nut 22 is housed in the flange housing part 213b of the base 21 with the flange part 222 opposite to the flange housing part 213b.

Since the nut 22 of the present embodiment includes the flange part 222, there is no need to provide a separate washer, and there exists not only an effect of reducing assembly man-hours but also a seat surface enlarging from the nut part 221 to the flange part 222, thereby increasing tightening strength. This prevents loosening of fastening of the bolt 30 and the nut 22 that may occur if the nut 22 caves in the base 21. The flange part 222 has a substantially oblong shape and is housed in the flange housing part 213b such that the nut 22 does not rotate together when fastening the bolt 30 to the nut 22. Thus, the tightening strength also increases in that the bolt 30 is prevented from idle rotation.

### (Disc Spring 23)

The disc spring 23 is a component that generates a contact force F between the first terminal 24 and the second terminal 112. As shown in FIG. 6, the disc spring 23 includes an annular part 231 and a first hole part 232 provided in the center of the annular part 231. The disc spring 23 is formed of, for example, carbon steel, alloy steel, stainless steel, copper alloy, or the like. In this example, the annular part 231 has a shallow dish shape having a circular outline. The first hole part 232 has a hole shape into which the nut part 221 is insertable, and the disc spring 23 is mounted on the flange part 222 (on a surface 222a) by inserting the nut part 221 into the first hole part 232 from the end 221a with a surface 231b side of the first hole part 232 opposite to the end 221a. The disc spring 23 has a height h2 as its thickness (height) (see FIG. 9).

### (First Terminal 24)

The first terminal 24 is a terminal on a side connected to a main body driven by electricity, such as an electronic device, for example. The first terminal 24, in this example, is a thin plate-shaped metal flat plate formed in an L-shape by bending a rectangular flat plate. The metal flat plate of the first terminal 24 has the thickness h3 (see FIG. 9). The first terminal 24 includes the connecting part 241 and the articulating part 242. The connecting part 241 is housed in the terminal housing part 213c of the base 21, to electrically connect to the second terminal 112. The articulating part 242 articulating with the connecting part 241 is formed, for example, by bending at 90 degrees from an end of the connecting part 241 and is housed in the terminal housing part 213d of the base 21. The connecting part 241 includes the second hole part 243. The second hole part 243 is configured such that a central axis of a threaded part 223 of the nut 22 and a central axis of the first hole part 232 of the disc spring 23 are on the same axis as a central axis of the second hole part 243, when the terminal housing part 213c houses the connecting part 241. Although the second hole part 243 is smaller than an outer shape of the head 31 (FIG. 3) of the bolt 30, the second hole part has a hole shape into which the nut part 221 of the nut 22 is insertable. The first terminal 24 is mounted on the disc spring 23 by inserting the nut part 221 from the end 221a into the second hole part 243 with the second hole part 243 on a surface 241b side opposite to the first hole part 232.

### (Lid 25)

The lid 25 is an insulating member that covers the connecting part 241 from a surface 241a of the connecting part 241 to reduce risk of electric shock. The lid 25 is formed of, for example, a thermoplastic resin such as PBT. Each lid 25 has the top surface cover 251, a hole 252, and six fitting protrusions 253. The top surface cover 251 has a substantially rectangular thin plate shape. The hole 252 is provided in the top surface cover 251. The hole 252 is provided at a position at which a central axis of the hole 252 is on the same axis as a central axis of each of the threaded part 223, the first hole part 232, and the second hole part 243 when mounting the top surface cover 251 on the connecting part 241 from the surface 241a. The hole 252 has a hole shape larger than a hole shape of the second hole part 243 and slightly larger than an outer shape of the toothed washer 26a that is an example of the protrusion member 26. Each fitting protrusion 253 is provided to protrude in the direction of inserting the bolt 30 (the downward direction in (c) in FIG. 2) at a peripheral edge of the top surface cover 251. In this example, for the fitting protrusions 253, two fitting protrusions are provided at opposite ends of the top surface cover 251 in the short direction, respectively, and one fitting protrusion is provided near a center between the opposite ends in the longitudinal direction. Each fitting protrusion 253 is provided at a position to be insertable into the fitting hole 213f provided in the base 21, when mounting the lid 25 on the connecting part 241. Each fitting protrusion 253 includes a convex portion 253a protruding inward from the edge of the top surface cover 251, at a protruding tip of the fitting protrusion. The convex portion 253a is engaged with the base 21 by inserting the fitting protrusion 253 into the fitting hole 213f. Thereby, the base 21 is covered with the lid 25. Engaging the convex portion 253a with the base 21 prevents the nut 22, the disc spring 23, and the first terminal 24 from being removed from housing in the base 21.

### (Protrusion Member 26)

The protrusion member 26 is provided between the second terminal 112 and the first terminal 24, and the protrusion member 26 is incorporated into these terminals to break through a nonconductor material such as an oxide film on a contact surface, thereby assuming a role of removing the nonconductor material. In the present embodiment, as an example of the protrusion member 26, as shown in FIG. 6, the toothed washer 26a including an annular part 261, a plurality of protruding portions 262, and a fourth hole part 263 is for use. The toothed washer 26a is, for example, made of iron or stainless steel.

The annular part 261 is an annular thin plate part, and in this example, an outer shape of the annular part including the protruding portions 262 is a shape slightly smaller than the hole 252 of the lid 25. The plurality of protruding portions 262 are protruding parts protruding from the annular part 261 toward at least one of the first terminal 24 or the second terminal 112. The protruding portion 262 serves as a tooth that bites into a surface of one of the second terminal 112 or the first terminal 24, or into the surfaces of both the second terminal 112 and the first terminal 24. The fourth hole part 263 has a hole shape that is larger than the second hole part 243 of the connecting part 241 and into which the nut part 221 is insertable. The toothed washer 26a of the protrusion member 26 is mounted on the connecting part 241 by inserting the toothed washer into the hole 252 of the lid 25 mounted on the connecting part 241.

### <Bolt 30>

As shown in FIG. 3, the bolt 30 includes the threaded part 32 and the head 31. The bolt 30 is, for example, made of iron. The threaded part 32 is insertable into the third hole part 112d of the second terminal 112 and engaged with the nut part 221 from the end 221a of the nut 22. The head 31 is provided at one end of the threaded part 32 and has an outer shape smaller than the hole 121c of the harness cover 12 and larger than the third hole part 112d.

### <Assembling Method of Connector 1A>

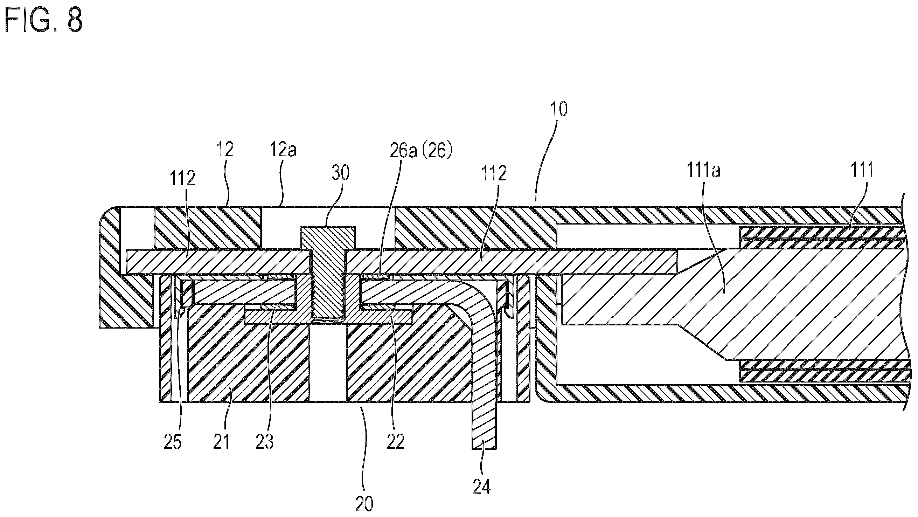

For assembling the harness connector 10, as shown in FIGS. 4 and 5, the harness connector 10 is assembled by inserting the second terminals 112 of the harnesses 11 into the holes 122a1 of the harness cover 12 and fitting the protruding parts 112c into the grooves 121e, respectively. The hole 122a1 on the fastening part 121 side is configured such that the second terminal 112 is insertable and the copper wire 111a is non-insertable (see FIG. 8).

The assembling of the main body connector 20 is performed as follows (FIGS. 6, 7). The flange parts 222 of the nuts 22 are mounted toward the flange housing parts 213b of the base 21, respectively. Next, the disc springs 23 are mounted on the flange parts 222 (on the surfaces 222a) by passing the first hole parts 232 into the nut parts from the end 221a with the first hole parts 232 of the disc springs 23 on the surface 231b side opposite to the surfaces 222a, respectively. Next, the first terminals 24 are mounted on surfaces 231a of the disc springs 23 by inserting the nut parts 221 from the ends 221a into the second hole parts 243 from the ends 221a with the second holes 243 of the first terminals 24 on the surface 241b side opposite to the ends 221a, respectively. Next, the lids 25 are mounted on the connecting parts 241 such that the holes 252 of the lids 25 on a surface 251b side face the ends 221a and the holes 252 are at positions opposite to the threaded parts 223, the first hole parts 232 and the second hole parts 243, respectively. In this case, the fitting protrusion 253 including the convex portion 253a fits in the fitting hole 213f. The protrusion members 26 are inserted into the holes 252 of the lids 25 and mounted on the connecting parts 241 of the first terminals 24, respectively.

As shown in FIG. 3, the connector 1A is assembled by inserting and fitting the main body connector 20 into the fastening part 121 of the harness connector 10. In this state, from above the harness cover 12, the bolts 30 are inserted toward the threaded parts 223 of the nuts 22, by screwing, through the holes 121c, the third hole parts 112d, the holes 252, the fourth hole parts 263, the second hole parts 243, and the first hole parts 232, respectively. As a result, the bolts 30 are engaged with the nuts 22, completing the assembling of the connector 1A.

FIG. 8 is an enlarged view around the main body connector 20 in the A-A cross-sectional view of (b) in FIG. 2. Advancing the bolt 30 to engage with the nut 22 with the main body connector 20 being fitted into the harness connector 10 causes the disc spring 23 to collapse as shown in FIG. 8. In this state, a reaction force is generated in the disc spring, and a contact force is generated between the second terminal 112 and the first terminal 24. For the disc spring 23 to generate a desired reaction force, the connector 1A of the present embodiment is configured to provide a gap between the second terminal 112 and the nut 22 as a preadjusted gap (gap V), in a state before fastening the bolt 30.

### <Gap V>

FIG. 9 illustrates schematic views for explaining the fastening of the bolt 30 and the nut 22 shown in FIG. 8. (a) shows a state before bolt fastening, and (b) shows a state after the bolt fastening. To promote understanding of action of the gap V, FIG. 9 only shows the bolt 30, the second terminal 112, the protrusion member 26, the first terminal 24, the disc spring 23, and the nut 22 and omits the others. FIG. 9 exaggerates shapes and heights of the protrusion member 26 and the disc spring 23 and omits a thread shape in the nut part 221 of the nut 22. Furthermore, to identify the schematic view, a hatching pattern different from hatching of FIG. 8 is used.

As shown in (a) in FIG. 9, the connector 1A of the present embodiment is configured to provide the gap V between the end 221a of the nut 22 and the surface 112f of the second terminal 112 in a state where the head 31 of the bolt 30 is not pressing the second terminal 112 (a state before bolt fastening). In other words, the connector is configured to provide the predetermined gap V between the end 221a of the nut part 221 and the second terminal 112 (surface 112f), when the second terminal 112 is mounted on the protrusion member 26 before the nut part 221 is engaged with the threaded part 32.

The gap V is adjusted to be of a size such that a predetermined contact force determined in advance is generated between the first terminal 24 and the second terminal 112, when the nut part 221 is engaged with the threaded part 32 of the bolt 30 to an extent that the gap V is removed (until the gap V is zero).

When the bolt 30 is tightened relative to the nut part 221, the engagement of the threaded part 32 with the nut part 221 advances. As shown in (b) in FIG.9, when the engagement advances to a position at which the gap V is removed, the surface 112f contacts the end 221a, and further engagement requires much more torque than a tightening force (torque) until just before, which substantially prevents the bolt from being inserted further. From another point of view, as shown in (b) in FIG. 9, the disc spring 23 can still afford to be collapsed, although the disc spring is collapsed from height h2 to height h2'. However, when the surface 112f contacts the end 221a, the bolt is substantially prevented from being inserted further. Thereby, the disc spring 23 maintains the height h2'. Therefore, a person performing a bolt fastening work can recognize that the tightening with the appropriate tightening force adjusted in advance is completed and can end (complete) the fastening work.

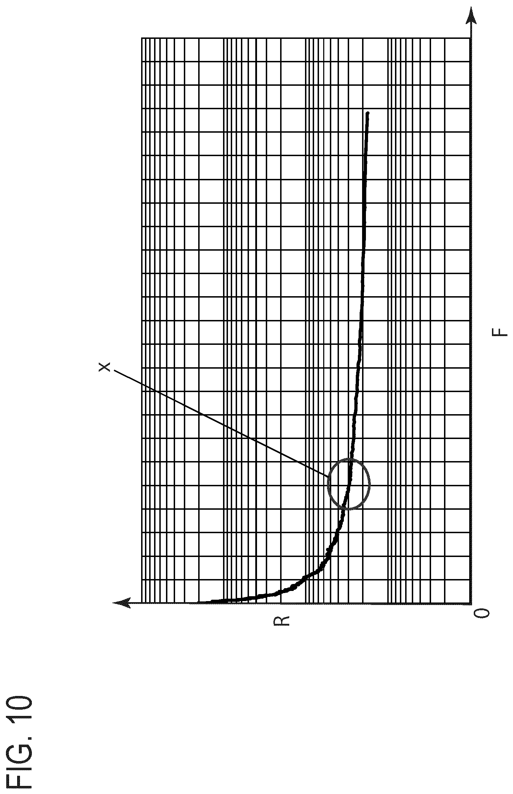

FIG. 10 is a diagram showing a relationship between the contact force F and a contact resistance R between the first terminal 24 and the second terminal 112. As shown in FIG. 10, the contact resistance R decreases with increase of the contact force F. However, if the contact force F is in or above a certain range, no significant change occurs in an amount of decrease in the contact resistance R relative to the increase in the contact force F compared to the previous contact force F. In an actual work, if the contact force F further increases beyond an appropriate contact force, load on another component constituting the connector 1A (for example, the base 21 or the like) increases.

The connector 1A of the present disclosure has the gap V adjusted such that the contact force between the second terminal 112 and the first terminal 24 falls within a predetermined range determined in advance. The predetermined range is a range of generating the contact force that is sufficient for electrical conduction and applies no large load to peripheral components. For example, it is conceivable to constitute the gap V of the connector 1A in a target such as a region x shown in FIG. 10 or the vicinity of the region x.

In the connector 1A configured as described above, when inserting and fitting the threaded part 32 from above to fasten the bolt with the nut 22 until a predetermined gap V is removed, the surface 112f of the second terminal 112 contacts the end 221a of the nut part 221, to substantially prevent the bolt from being inserted further. Therefore, without performing torque management using a tool such as a torque wrench or the like, it is possible to fasten the terminals of the connector to each other with the contact force that is sufficient for the electrical conduction and applies no large load to the peripheral components.

In other words, the connector 1A provides the predetermined gap V between the second terminal 112 and the nut 22 to thereby manage the contact force that is sufficient for the electrical conduction and that applies no large load to the peripheral components and can therefore achieve the connection between the terminals with the appropriate contact force without using any tool such as the torque wrench or the like.

### FIRST MODIFICATION

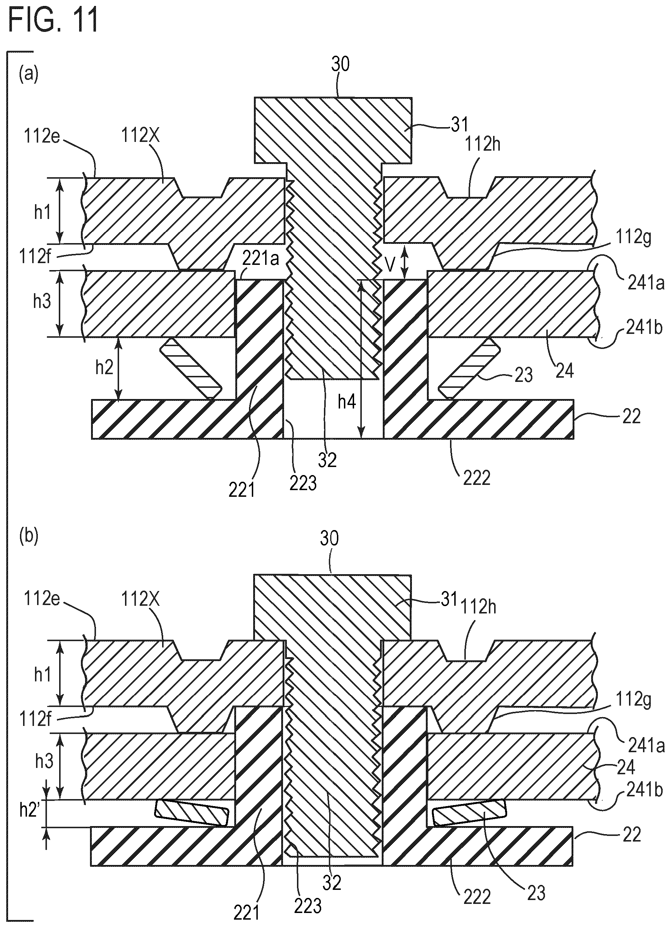

Hereinafter, a connector according to a first modification of the present disclosure will be described with reference to the drawings. In the following description, components having the same function are denoted with the same reference numeral, to omit duplicate descriptions. FIG. 11 illustrates schematic views for explaining fastening of a bolt 30 and a nut 22 in a connector 1A according to the first modification. (a) shows a state before bolt fastening, and (b) shows a state after the bolt fastening.

In the present modification, no protrusion member 26 is used, and the second terminal 112 is replaced with a second terminal 112X having a role of removing a nonconductor material on a contact surface. Specifically, as shown in FIG. 11, the second terminal 112 changes to the second terminal 112X including dowels 112g that are a plurality of protruding portions at a place where the protrusion member 26 on a surface 112f side was located. The second terminal 112X includes the plurality of dowels 112g protruding toward a first terminal 24 in a region opposite to the first terminal 24. FIG. 11 shows an example where the dowels 112g are molded by dowel processing, each dowel 112g is formed on the surface 112f side, and at a position aligned with this dowel, a groove 112h is formed on a surface 112e side. The dowel 112g described above can also undertake a role of removing the nonconductor material on the contact surface. In addition, since no protrusion member 26 is required, the number of components can be reduced, which is beneficial in terms of component management such as improvement of assembling efficiency.

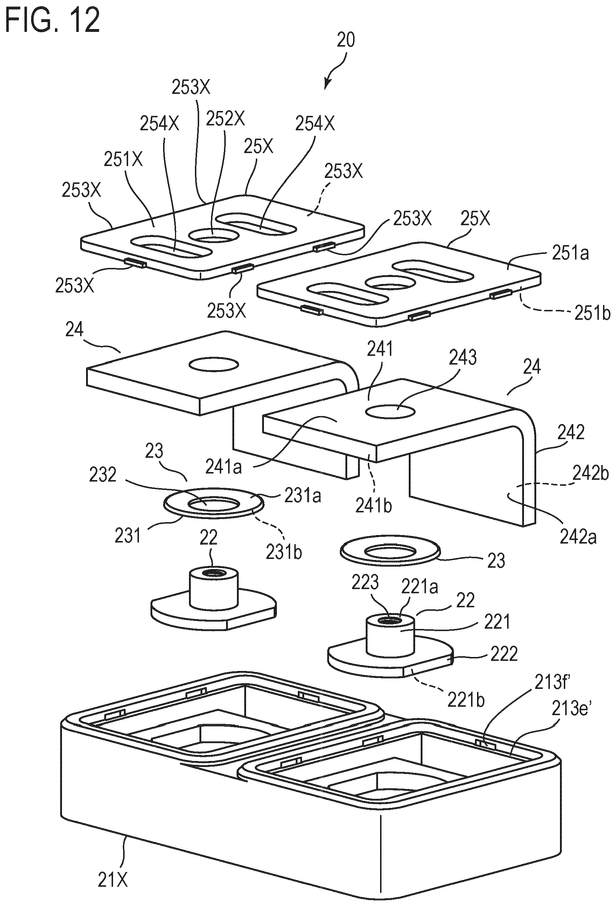

Since the second terminal 112X is for use in the connector 1A of the first modification, a main body connector 20 has a shape for this use. FIG. 12 is an exploded perspective view of the main body connector 20 according to the first modification. In the main body connector 20 of the present modification, as shown in FIG. 12, the lids 25 change to lids 25X, and the base 21 changes to a base 21X.

Similarly to the lid 25, a lid 25X is also an insulating member covering a connecting part 241 from above to reduce the risk of electric shock. The lid 25X includes a top surface cover 251X, a hole 252X, a set of holes 254X, and six fitting protrusions 253X. The top surface cover 251X has the same size as the top surface cover 251 and is formed slightly thicker than the top surface cover 251. The hole 252X has a central axis at the same position as the central axis of the hole 252. The hole 252X has a shape larger than the threaded part 32 such that the threaded part 32 is insertable and has a hole shape smaller than the head 31. Each fitting protrusion 253X is provided, at a peripheral edge of the top surface cover 251X, to slightly protrude in a direction of expanding the peripheral edge. In this example, the fitting protrusion 253X is provided at the same position as the position of the fitting protrusion 253. The fitting protrusion 253X is inserted into a fitting hole 213f of the base 21X when mounting the lid 25X on the first terminal 24. One set of holes 254X is provided in a longitudinal direction of the top surface cover 251X with the hole 252X sandwiched between the set of holes. Each hole 254X has a hole shape slightly larger than a cross-sectional shape of the dowel 112g such that the dowel 112g is insertable. The hole 254X has a hole shape having an oblong shape in this example.

The base 21X has the same basic shape as the base 21, and the lid housing part 213e changes to a lid housing part 213e' including a deeper groove depending on a thickness of the top surface cover 251X. In the base 21X, each fitting hole 213f changes to the fitting hole 213f depending on a shape of each fitting protrusion 253X.

Note that a dowel assuming a role equivalent to the role of the dowel 112g may be provided on the first terminal 24 on a surface 241a side. That is, the dowel assuming the same role as the dowel 112g may be provided on the surface 112f side or on the surface 241a side. Alternatively, a position of the dowel may be shifted to provide dowels on both the surface 112f side and the surface 241a side.

Since the dowel 112g can undertake the role of removing the nonconductor material on the contact surface in place of the protrusion member 26, the protrusion member 26 or the dowel 112g may be replaced with another component that performs a function similarly to the protrusion member 26. The other component may be, for example, a cantilever spring component or a component such as a wave spring.

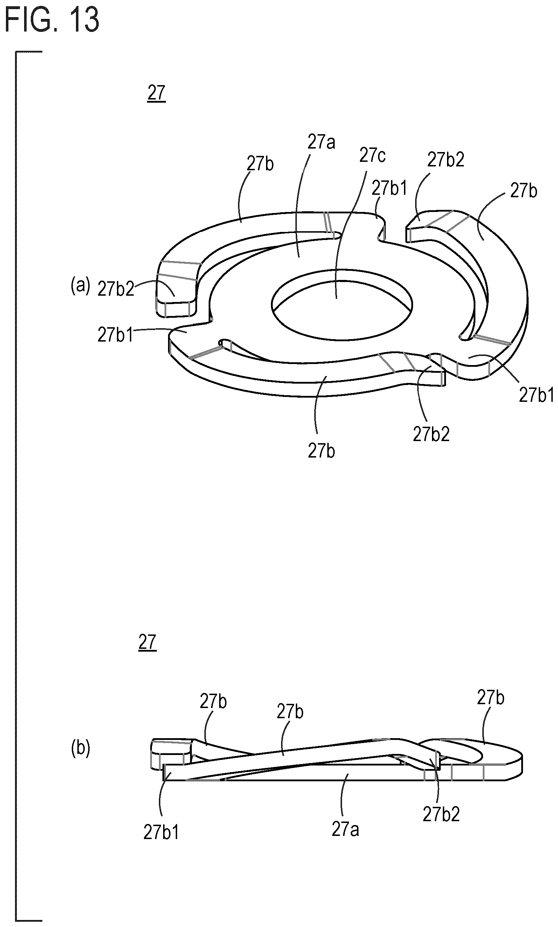

FIG. 13 illustrates schematic views showing a cantilever spring component 27 as an example of the other component. (a) is a perspective view, and FIG. (b) is a side view. The cantilever spring component 27 includes a ring-shaped annular part 27a corresponding to the annular part 261 of the toothed washer 26a shown in FIG. 6, a plurality of cantilever springs 27b arranged around the annular part 27a and corresponding to the protruding portions 262, and a hole 27c corresponding to the fourth hole part 263. In this example, the cantilever spring component 27 includes three cantilever springs 27b. Each cantilever spring 27b has an elongated plate shape including ends 27b1, 27b2. The cantilever spring 27b includes the end 27b1 articulating with the annular part 27a and the end 27b2 as a free end and is curved to entirely follow an annular shape of the annular part 27a. The cantilever spring 27b extends slightly upward starting from the end 27b1 toward the end 27b2 as shown in (b) in FIG. 13. The cantilever spring 27b from the vicinity of the end 27b2 to the end 27b2 extends slightly downward toward the end 27b2 in (b) in FIG. 13. Since the cantilever spring 27b has such a configuration as described above, each cantilever spring 27b has a function of a spring entirely as the cantilever spring. An example of the other component may be a component including such a configuration as shown in FIG. 13.

The connector 1A of the first modification described above also provides a predetermined gap V between the second terminal 112 (or the second terminal 112X) and the nut 22 to thereby manage a contact force that is sufficient for electrical conduction and that applies no large load to peripheral components and can therefore achieve connection between terminals with an appropriate contact force without using any tool such as a torque wrench or the like.

### SECOND MODIFICATION

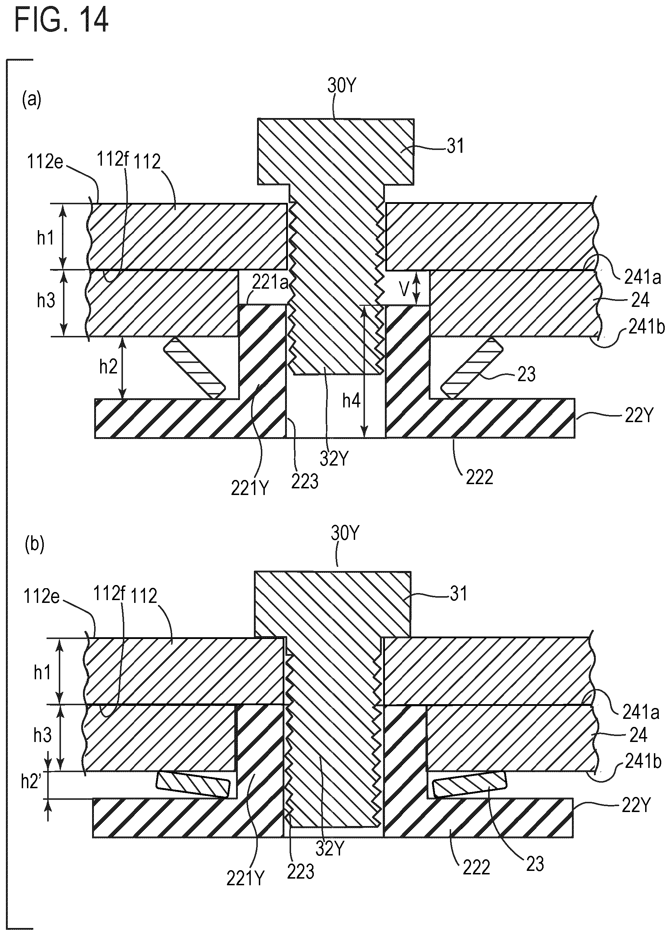

Hereinafter, a connector according to a second modification of the present disclosure will be described with reference to the drawings. In the following description, components having the same function are denoted with the same reference numeral, to omit duplicate descriptions. FIG. 14 illustrates schematic views for explaining fastening of a bolt 30Y and a nut 22Y in a connector 1A according to the second modification. (a) shows a state before bolt fastening, and (b) is a state after the bolt fastening.

The connector 1A of the present modification may include a configuration where a second terminal 112 directly contacts a first terminal 24 as shown in FIG. 14, if a problem of removing a nonconductor material on a contact surface can be solved by a method other than the first embodiment or the first modification. In FIG. 14, since the second terminal 112, the first terminal 24 and a disc spring 23 are for use as they are, the nut 22 changes to the nut 22Y including a nut part 221Y having a length shorter than a length of the nut part 221 such that the same gap as the gap V of the first embodiment can be provided. The bolt 30 changes to the bolt 30Y including a threaded part 32Y having a length shorter than a length of the threaded part 32.

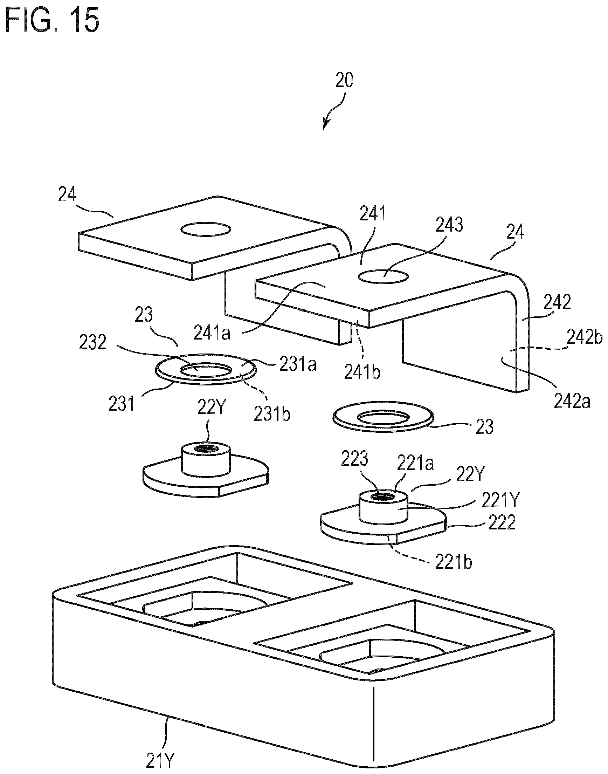

FIG. 15 is an exploded perspective view of a main body connector 20 according to the second modification. As shown in FIG. 15, the main body connector 20 of the present modification does not use the lid 25 and the protrusion member 26 included in the first embodiment, and hence the base 21 changes to a base 21Y including no lid housing parts 213e and no fitting holes 213f.

The connector 1A of the second modification described above also provides a predetermined gap V between the second terminal 112 and the nut 22Y to thereby manage a contact force that is sufficient for electrical conduction and that applies no large load to peripheral components and can therefore achieve connection between terminals with an appropriate contact force without using any tool such as a torque wrench or the like.

As above, the first embodiment, the first modification, and the second modification have been described. The disc spring 23 described in these embodiments may use any type of spring that has an equivalent function.

## Claims

1. A connector (1A) comprising:
a nut (22) including a nut part (221) and a flange part (222), the nut part having one end and another end opposite to the one end, and the flange part provided on the other end,
a spring (23) including a first hole part (232) into which the nut part is insertable, the spring being mounted on the flange part by inserting the nut part from the one end into the first hole part,
a first terminal (24) including a second hole part (243) into which the nut part is insertable, the first terminal being mounted on the spring by inserting the nut part from the one end into the second hole part,
a second terminal (112) including a third hole part (112d) having a hole shape smaller than an outer shape of the nut part and larger than a threaded hole shape of the nut, the second terminal being mounted on the first terminal with the third hole part opposite to the second hole part, and
a bolt (30) including a threaded part (32) and a head (31), the threaded part being insertable into the third hole part and engaged with the nut part from the end of the nut, the head being engageable with the nut part, the head being provided at one end of the threaded part and having an outer shape larger than the third hole part, wherein
the connector is configured to provide a predetermined gap (V) between the one end of the nut part and the second terminal, when the second terminal is mounted on the first terminal before the nut part is engaged with the bolt , wherein the predetermined gap is of a size such that the spring generates a predetermined contact force determined in advance between the first terminal and the second terminal, when the nut part is engaged with the bolt until the predetermined gap is removed.

2. The connector according to Claim 1, wherein the bolt includes a threaded part that is insertable into the third hole part and that is engaged with the nut part from the one end, and a head provided at one end of the threaded part and having a shape larger than the hole shape of the third hole part.

3. The connector according to Claim 1, wherein a length of the nut part in a direction of being engaged with the bolt is larger than a thickness of the first terminal.

4. The connector according to Claim 1, wherein the spring comprises a disc spring.

5. The connector according to Claim 1, further comprising:
a protrusion member (26) including an annular part having a fourth hole part into which the nut part is insertable, the annular part being mounted between the first terminal and the second terminal by inserting the nut part from the one end through the fourth hole part, and a plurality of protruding portions protruding from the annular part toward at least one of the first terminal or the second terminal.

6. The connector according to Claim 5, wherein the protrusion member comprises a toothed washer.

7. The connector according to any one of claims 1 to 4, wherein the first terminal includes, in a region opposite to the second terminal, a plurality of dowels protruding toward the second terminal.

8. The connector according to any one of claims 1 to 4, wherein the second terminal includes, in a region opposite to the first terminal, a plurality of dowels protruding toward the first terminal.

## Patentansprüche

1. Verbinder (1A) mit:
einer Mutter (22) mit einem Mutterteil (221) und einem Flanschteil (222), wobei das Mutterteil ein Ende und ein anderes Ende gegenüber dem einen Ende aufweist und der Flanschteil an dem anderen Ende vorgesehen ist,
einer Feder (23) mit einem ersten Lochteil (232), in das der Mutterteil einführbar ist, wobei die Feder an dem Flanschteil angebracht wird, indem das Mutterteil von dem einen Ende in den ersten Lochteil eingeführt wird,
einem ersten Anschluss (24) mit einem zweiten Lochteil (243), in den der Mutterteil einführbar ist, wobei der erste Anschluss an der Feder angebracht wird, indem der Mutterteil von dem einen Ende in den zweiten Lochteil eingeführt wird,
einem zweiten Anschluss (112) mit einem dritten Lochteil (112d), der eine Lochform hat, die kleiner als eine Außenform des Mutterteils und größer als eine Gewindelochform der Mutter ist, wobei der zweite Anschluss an dem ersten Anschluss mit dem dritten Lochteil gegenüber dem zweiten Lochteil angebracht wird, und
einem Bolzen (30) mit einem Gewindeteil (32) und einem Kopf (31), wobei der Gewindeteil in den dritten Lochteil einführbar ist und mit dem Mutterteil von dem Ende der Mutter in Eingriff steht, wobei der Kopf mit dem Mutterteil in Eingriff bringbar ist, wobei der Kopf an einem Ende des Gewindeteils bereitgestellt ist und eine Außenform hat, die größer als der dritte Lochteil ist, wobei
der Verbinder dazu konfiguriert ist, einen vorbestimmten Spalt (V) zwischen dem einen Ende des Mutterteils und dem zweiten Anschluss bereitzustellen, wenn der zweite Anschluss an dem ersten Anschluss angebracht wird, bevor der Mutterteil mit dem Bolzen in Eingriff steht, wobei der vorbestimmte Spalt so groß ist, dass die Feder eine vorbestimmte Kontaktkraft erzeugt, die im Voraus zwischen dem ersten Anschluss und dem zweiten Anschluss bestimmt wird, wenn der Mutterteil mit dem Bolzen in Eingriff steht, bis der vorbestimmte Spalt entfernt ist.

2. Verbinder nach Anspruch 1, wobei der Bolzen einen Gewindeteil, der in den dritten Lochteil einführbar ist und der mit dem Mutterteil von dem einen Ende in Eingriff steht, und einen Kopf aufweist, der an einem Ende des Gewindeteils bereitgestellt ist und eine Form hat, die größer als die Lochform des dritten Lochteils ist.

3. Verbinder nach Anspruch 1, wobei eine Länge des Mutterteils in einer Richtung des Eingriffs mit dem Bolzen größer als eine Dicke des ersten Anschlusses ist.

4. Verbinder nach Anspruch 1, wobei die Feder eine Tellerfeder aufweist.

5. Verbinder nach Anspruch 1, ferner mit:
einem Vorsprungselement (26) mit einem ringförmigen Teil mit einem vierten Lochteil, in den der Mutterteil einführbar ist, wobei der ringförmige Teil zwischen dem ersten Anschluss und dem zweiten Anschluss angebracht wird, indem der Mutterteil von dem einen Ende durch den vierten Lochteil eingeführt wird, und einer Vielzahl von vorstehenden Abschnitten, die von dem ringförmigen Teil in Richtung des ersten Anschlusses und/oder des zweiten Anschlusses vorstehen.

6. Verbinder nach Anspruch 5, wobei das Vorsprungselement eine gezahnte Unterlegscheibe aufweist.

7. Verbinder nach einem der Ansprüche 1 bis 4, wobei der erste Anschluss in einem Bereich gegenüber dem zweiten Anschluss eine Vielzahl von Dübeln aufweist, die in Richtung des zweiten Anschlusses vorstehen.

8. Verbinder nach einem der Ansprüche 1 bis 4, wobei der zweite Anschluss in einem Bereich gegenüber dem ersten Anschluss eine Vielzahl von Dübeln aufweist, die in Richtung des ersten Anschlusses vorstehen.

## Revendications

1. Connecteur (1A) comprenant :
un écrou (22) comprenant une partie d'écrou (221) et une partie de bride, la partie d'écrou ayant une extrémité et une autre extrémité opposée à l'une extrémité, et la partie de bride fournie sur l'autre extrémité,
un ressort (23) comprenant une première partie de trou (232) dans laquelle la partie d'écrou peut être insérée, le ressort étant monté sur la partie de bride en insérant la partie d'écrou à partir de l'une extrémité dans la première partie de trou,
une première borne (24) comprenant une deuxième partie de trou (243) dans laquelle la partie d'écrou peut être insérée, la première borne étant montée sur le ressort en insérant la partie d'écrou à partir de l'une extrémité dans la deuxième partie de trou,
une deuxième borne (112) comprenant une troisième partie de trou (112d) ayant une forme de trou plus petite qu'une forme externe de la partie d'écrou et plus grande qu'une forme de trou taraudé de l'écrou, la deuxième borne étant montée sur la première borne avec la troisième partie de trou opposée à la deuxième partie de trou, et
un boulon (30) comprenant une partie filetée (32) et une tête (31), la partie filetée pouvant être insérée dans la troisième partie de trou et mise en prise avec la partie d'écrou à partir de l'extrémité de l'écrou, la tête pouvant être mise en prise avec la partie d'écrou, la tête fournie au niveau d'une extrémité de la partie filetée et ayant une forme externe plus grande que la troisième partie de trou, dans lequel
le connecteur est configuré pour fournir un espace prédéterminé (V) entre l'une extrémité de la partie d'écrou et la deuxième borne, lorsque la deuxième borne est montée sur la première borne avant que la partie d'écrou soit mise en prise avec le boulon, dans lequel l'espace prédéterminé est d'une taille telle que le ressort génère une force de contact prédéterminée déterminée à l'avance entre la première borne et la deuxième borne, lorsque la partie d'écrou est mise en prise avec le boulon jusqu'à ce que l'espace prédéterminé soit enlevé.

2. Connecteur selon la revendication 1, dans lequel le boulon comprend une partie filetée qui peut être insérée dans la troisième partie de trou et qui est mise en prise avec la partie d'écrou à partir de l'une extrémité, et une tête fournie au niveau d'une extrémité de la partie filetée et ayant une forme plus grande que la forme de trou de la troisième partie de trou.

3. Connecteur selon la revendication 1, dans lequel une longueur de la partie d'écrou dans une direction de mise en prise avec le boulon est plus grande qu'une épaisseur de la première borne.

4. Connecteur selon la revendication 1, dans lequel le ressort comprend un ressort à disque.

5. Connecteur selon la revendication 1, comprenant en outre :
un élément en saillie (26) comprenant une partie annulaire ayant une quatrième partie de trou dans laquelle la partie d'écrou peut être insérée, la partie annulaire étant montée entre la première borne et la deuxième borne en insérant la partie d'écrou à partir de l'une extrémité à travers la quatrième partie de trou, et une pluralité de parties en saillie faisant saillie à partir de la partie annulaire vers au moins l'une de la première borne ou de la deuxième borne.

6. Connecteur selon la revendication 5, dans lequel l'élément en saillie comprend une rondelle dentée.

7. Connecteur selon l'une quelconque des revendications 1 à 4, dans lequel la première borne comprend, dans une région opposée à la deuxième borne, une pluralité de chevilles faisant saillie vers la deuxième borne.

8. Connecteur selon l'une quelconque des revendications 1 à 4, dans lequel la deuxième borne comprend, dans une région opposée à la première borne, une pluralité de chevilles faisant saillie vers la première borne.
